# EUROPÄISCHE PATENTANMELDUNG

(11) **EP 1 615 313 A2**
(43) Veröffentlichungstag der Anmeldung: **11.01.2006**
(21) Anmeldenummer: 05013403.0
(22) Anmeldetag: 22.06.2005
(51) Int. Cl.: H02H 3/06

(54) **Vorrichtung zur Schaltung und Überwachung eines Laststromes**

(30) Priorität: 05.07.2004 DE 102004032613
(71) Anmelder: ENDRESS + HAUSER WETZER GmbH + Co. KG, D-87484 Nesselwang (DE)
(72) Erfinder: Konrad, Stephan, 87669 Rieden (DE); Härle, Thomas, 87616 Marktoberdorf (DE)
(74) Vertreter: Andres, Angelika Maria

(57) **Zusammenfassung**

Die Erfindung bezieht sich auf eine Vorrichtung zur Schaltung und Überwachung eines Laststromes (ILast), die sehr schnell auf das Auftreten eines Überstromereignisses reagiert.

Die erfindungsgemäße Vorrichtung umfasst die folgenden Komponenten:
- eine Steuereinheit (3) und ein Schaltelement (5), wobei die Steuereinheit (3) zum Einschalten des Schaltelements (5) einen Einschaltimpuls (TSe) und zum Ausschalten des Schaltelements (5) ein Ausschaltsignal (TSa) generiert;
- eine Stromüberwachungseinheit (6), die im Falle des Auftretens eines Überstromereignisses ein Statussignal (OCü) "Überstrom" und im Normalbetrieb ein Statussignal (OCn) "Normal" generiert;
- eine Halte-/Rücksetzschaltung (7), die aus dem Einschaltimpuls (TSe) der Steuereinheit (3) bei einem Statussignal (OCn) "Normal" der Stromüberwachungseinheit (6) ein Einschaltsignal (SWe) für das Schaltelement (5) generiert, wobei die Überstromüberwachungseinheit (6) mit dem Statussignal (OCü) "Überstrom" das Einschaltsignal (SW) für das Schaltelement (5) der Halte-/Rücksetzschaltung (7) rücksetzt und wobei die Steuereinheit (3) den Zustand des Schaltelements (5) zyklisch nach einer vorgegebenen Zeitdauer (ts) überprüft und nach einer Abschaltung durch ein Überstromereignis zyklisch einen Einschaltimpuls (TSe) generiert.

## Beschreibung

Die Erfindung bezieht sich auf eine Vorrichtung zur Schaltung und Überwachung eines Laststromes mit einer automatischen Überstromabschaltung. Prinzipiell ist die erfindungsgemäße Vorrichtung bei allen Schaltungen mit Schaltausgang einsetzbar. Bei der Last handelt es sich beispielsweise um ein beliebiges elektrisches oder elektronisches Element, z.B. ist die Last eine Spule oder ein Relais. Die erfindungsgemäße Schaltung ist beispielsweise eine Komponente eines Gerätes der Messtechnik und der Prozeßautomatisierung zur Messung und Überwachung von physikalischen und/oder chemischen Prozessgrößen.

Grundsätzlich ist es notwendig, in einem Schaltkreis, der in Verbindung mit einer Last steht, einen auftretenden Überstrom zu erkennen und nachfolgend möglichst umgehend die Last von dem Schaltkreis zu trennen. Ein Überstrom tritt auf, wenn ein Überstromereignis vorliegt. Ein Überstromereignis liegt beispielsweise vor, wenn ein Betreiber bei der Inbetriebnahme unbeabsichtigt einen Kurzschluß verursacht oder die Last falsch auslegt.

Unter einem Überstrom wird ein Strom verstanden, der so hoch ist, dass er die elektrischen und/oder elektronischen Komponenten in der Schaltung nachträglich schädigen oder ihre Lebensdauer verringern würde. Um das Auftreten eines Überstroms zeitnah zu erkennen, ist es bekannt geworden, einen Überstrorn in der Schaltung zu detektieren und bei Erkennen eines Überstrorns, wenn also der in dem Schaltkreis fließende Strom einen vorgegebenen tolerierbaren Grenzwert überschreitet, ein entsprechendes Signal an eine Steuereinheit, insbesondere an einen Mikroprozessor weiterzugeben. In einem zweiten Schritt trennt die Steuereinheit bzw. der Mikroprozessor über ein geeignetes Schaltelement die Last von dem Schaltkreis.

Diese bekannte Lösung hat folgende Nachteile:
Prinzipiell gibt es gibt zwei Möglichkeiten, einen detektiertes Überstrom an die Steuereinheit weiterzugeben: entweder durch zyklisches Abfragen ("Pollen") oder über einen Interrupt.
- Wird der Überstrom von der Steuereinheit zyklisch abgefragt ("gepollt"), ist die Zeitspanne zwischen dem Auftreten des Überstroms bis zu seiner Erkennung in der Steuereinheit undefiniert. Die maximal mögliche Verzögerung hängt dabei von der Zykluszeit ("Pollrate") der Abfrage ab. Falls die maximal mögliche Verzögerung zur Erkennung eines Überstroms vernachlässigbar klein sein soll, wird eine "schnelle" Steuereinheit benötigt. Der Einsatz einer "schnellen" Steuereinheit ist aus Kostengründen und aus Gründen der Stromaufnahme jedoch oft nicht möglich.
- Löst der erkannte Überstrom in der Steuereinheit einen Interrupt aus, ist die Zeit vom Auftreten bis zum Erkennen des Überstroms in der Steuereinheit zwar definiert, allerdings kann es durch den plötzlich auftretenden Interrupt zu einer Beeinträchtigung anderer Funktionen der Steuereinheit, z.B. einer laufenden Messung oder Kommunikation, kommen.
- Beim Schalten von kapazitiven Lasten tritt durch das Umladen der Kapazität ein kurzzeitiger Überstrom während des Schaltvorgangs auf. Um solche Lasten zu schalten, muss ein kurzzeitiger Überstrom toleriert werden; es ist also eine Toleranzzeit tR notwendig.
- Wird das Überstromereignis von der Steuereinheit zyklisch abgefragt ("gepollt"), muss die Zykluszeit der Abfrage viel kleiner als die Toleranzzeit tR sein. Dies setzt wiederum eine "schnelle" Steuereinheit mit den oben genannten Nachteilen voraus. Zusätzlich wird eine solche Steuereinheit noch stark ausgelastet.
- Löst das Überstromereignis in der Steuereinheit einen Interrupt aus, muss nach der Toleranzzeit tR der Überstrom wieder überprüft werden, um die Dauer des Überstromereignisses zu erfassen. Die Toleranzzeit tR muss also in der Steuereinheit generiert werden. Hierfür ist ein zusätzlicher Zähler in der Steuereinheit nötig.

Der Erfindung liegt die Aufgabe zugrunde, eine Vorrichtung zur Überwachung und Schaltung eines Laststrorns vorzuschlagen, wobei es zu einer automatischen Abschaltung des Laststrorns im Falle eines Überstromereignisses kommt.

Die Aufgabe wird durch eine Vorrichtung gelöst, die die folgenden Komponenten aufweist
- eine Steuereinheit und ein Schaltelement, wobei die Steuereinheit zum Einschalten des Schaltelements einen Einschaltimpuls (TSe) und zum Ausschalten des Schaltelements ein Ausschaltsignal (TSa) generiert;
- eine Stromüberwachungseinheit, die im Falle des Auftretens eines Überstroms ein Statussignal (OCü) "Überstrom" und im Normalbetrieb ein Statussignal (OCn) "Normal" generiert und kurzzeitige Überströme unterdrückt (Toleranzzeit tR);
- eine Halte-/Rücksetzschaltung, die aus dem Einschaltimpuls (TSe) der Steuereinheit bei einem Statussignal (OCn) "Normal" der Stromüberwachungseinheit ein Einschaltsignal (SW) für das Schaltelement generiert, wobei die Überstromüberwachungseinheit mit dem Statussignal (OCü) "Überstrom" das Einschaltsignal (SW) für das Schaltelement der Halte-/Rücksetzschaltung rücksetzt und wobei die Steuereinheit den Zustand des Schaltelements zyklisch nach einer vorgegebenen Zeitdauer überprüft und nach einer Abschaltung durch einen Überstrom zyklisch einen Einschaltimpuls (TS) generiert.

Die erfindungsgemäße Stromüberwachungseinheit ist hardwaremäßig realisiert. Ein Eingreifen der Steuereinheit, also der Software, ist nicht erforderlich. Die erfindungsgemäße Lösung ermöglicht ein unmittelbares, automatisches Abschalten des Laststromes, sobald ein Überstrom auftritt. Grob gesprochen, schafft die erfindungsgemäße Lösung eine Trennung zwischen Hardware und Software. In dem Moment, in dem das Überstromereignis länger als die Toleranzzeit tR auftritt, sperrt das Schaltelement. Üblicherweise ist die Steuereinheit der Master, der entscheidet, ob das Schaltelement aktiviert oder deaktiviert ist. Im Falle eines Überstromereignisses verliert quasi die Steuereinheit diese Master-Funktion, und die Stromüberwachungseinheit bestimmt, dass das Schaltelement deaktiviert ist. Die erfindungsgemäße Schaltung kommt ohne eine "schnelle" Steuereinheit und ohne Interrupts aus. Sie weist eine Toleranzzeit tR für kapazitive Lasten auf. Außerdem wird der Laststrom nach Verschwinden des Überstromereignisses automatisch wieder eingeschaltet.

Jeder neue Einschaltversuch führt solange das Überstromereignis vorliegt zu einer erneuten Abschaltung. Erst wenn die Ursache für das Überstromereignis beseitigt ist und kein Überstrom mehr auftritt, bleibt das Schaltelement nach einem erneuten Einschaltimpuls der Steuereinheit dauerhaft eingeschaltet.

Um das automatische Wiedereinschalten zu ermöglichen, übernimmt die Steuereinheit zyklisch Einschaltversuche. Diese zyklischen Einschaltversuche führen - da die Periodendauer für die zyklischen beliebig groß und ungenau sein kann - zu keiner übermäßigen Belastung der Steuereinheit und sind daher auch mit einer "langsamen" Steuereinheit realisierbar. Somit wird der Laststrom nach Ende des Überstromereignisses mit dem nachfolgenden zyklischen Einschaltimpuls der Steuereinheit automatisch wieder eingeschaltet. Bildhaft kann man die Stromüberwachungseinheit mit einer zuschnappenden Mausefalle vergleichen, die vom Einschaltimpuls der Steuereinheit gespannt, und vom Überstrom ausgelöst wird.

Da eine Hardware-Lösung bekanntlich wesentlich sicherer ist als eine Lösung, bei der eine Intervention von Software notwendig ist, lässt sich darüber hinaus mit der erfindungsgemäßen Vorrichtung ein hoher Sicherheitsstandard realisieren. Zudem ist die erfindungsgemäße Vorrichtung kostengünstig zu fertigen, da die einzelnen Komponenten, insbesondere das Schaltelement, nicht für Extrembelastungen ausgelegt sein müssen. Es können also kostengünstige Komponenten verwendet werden.

Gemäß einer vorteilhaften Weiterbildung der erfindungsgemäßen Vorrichtung handelt es sich bei der Steuereinheit um einen Mikroprozessor, der zumindest einen kombinierten Ausgang/Eingang aufweist, wobei der Ausgang nach Aussenden des Einschaltimpulses (TSe) als Eingang geschaltet ist, so dass über diesen Eingang (TS) der Status der Stromüberwachungseinheit einlesbar ist. Auch diese Ausgestaltung vermindert wiederum die Herstellungskosten für die erfindungsgemäße Vorrichtung, da an dem Mikroprozessor nur ein Anschluss-Pin als Eingang/Ausgang notwendig ist. Darüber hinaus wird hierdurch auch eine Leiterbahn eingespart.

Eine vorteilhafte Ausgestaltung der erfindungsgemäßen Vorrichtung sieht eine Speichereinheit vor, in der Information über den Status der Überstromüberwachung gespeichert ist. Damit steht die Information über aufgetretene Überstromereignisse auch zu späteren Zeitpunkten zur Verfügung. Insbesondere ist es in diesem Zusammenhang von Nutzen, wenn die Steuereinheit den gespeicherten Status der Stromüberwachungseinheit auswertet und im Falle eines Überstromereignisses als Fehlercode an einem Display anzeigt, an eine übergeordnete Leitstelle weiterleitet oder in anderer Form anzeigt.

Bevorzugt handelt es sich bei dem Schaltelement um einen Transistor oder um ein Relais. So kann als Schaltelement ein spannungsgesteuerter Transistor, z.B. ein MOSFET mit Gate, Source und Drain eingesetzt werden. Selbstverständlich kann auch ein stromgesteuerter bipolarer Transistor mit Emitter, Basis und Kollektor als Schaltelement zum Einsatz kommen.
Im Falle eines stromgesteuerten Schaltelements ist es vorteilhafter Weise eine Stromregelung vorgesehen, über die der Steuerstrom zu dem Schaltelement geregelt ist.

Als besonders vorteilhaft wird die Ausgestaltung der erfindungsgemäßen Vorrichtung angesehen, wonach eine Status-Anzeigeeinheit in einer Steuerleitung des Schaltelements angeordnet ist. Bevorzugt handelt es sich bei der Status-Anzeigeeinheit um eine optische Anzeigeeinheit, insbesondere um eine LED und/oder um akustische Status-Anzeigeeinheit. Die Status-Anzeigeeinheit arbeitet quasi automatisch. Im Falle des Auftretens eines Überstromereignisses spiegelt die LED zyklisch die Einschaltversuche der Steuereinheit - die LED ist im Blinkbetrieb. Ist das Schaltelement nicht aktiviert und die Last vom Schaltkreis getrennt, so leuchtet die LED nicht auf. Ist das Schaltelement hingegen aktiviert, so leuchtet die LED auf. Somit ist vor Ort der aktuelle Zustand der Schaltung sichtbar, ohne dass eine zusätzliche Ansteuerung notwendig ist. Selbstverständlich lässt sich die zuvor genannte Information Ober den Zustand der Schaltung auch über einen akustischen Melder wiedergeben.

Gemäß einer bevorzugten Ausführungsform der erfindungsgemäßen Vorrichtung handelt es sich bei der Halte-/Rücksetzschaltung um eine abschaltbare Treiberschaltung mit einem Signaleingang, einem Signalausgang und einem Aktivierungseingang (ENABLE), wobei an dem Signaleingang das Statussignal der Stromüberwachungseinheit und wobei an dem Aktivierungseingang der Einschaltimpuls der Steuereinheit und der rückgekoppelte Signalausgang anliegt und wobei der Signalausgang das Schaltelement (bzw. die Stromregelung) ansteuert.

Um die Toleranzzeit tR der Stromüberwachungseinheit gegenüber kurz auftretenden Überströmen definiert auf die in der Schaltung verwendeten Komponenten und die maximale zu schaltende Kapazität abzustimmen, weist die Stromüberwachungseinheit zumindest einen Stromvergleicher und eine Verzögerungsschaltung zum Einstellen der Toleranzzeit tR auf. Insbesondere handelt es sich bei dem Stromvergleicher um einen Komparator und bei der Verzögerungsschaltung um einen Tiefpass. Die Verwendung eines Tiefpasse bringt den Vorteil, dass die Toleranzzeit tR für hohe Überströme kürzer und für niedrige Überströme länger ist. Dies minimiert die Verlustleistung im Schaltelement.

Die Zykluszeit der Einschaltversuche der Steuereinheit und die Verzögerungszeit der Verzögerungsschaltung bestimmen beim Auftreten eines Überstromereignisses auch die Blinkfrequenz der LED, wenn zur Anzeige des Fehlerfalls eine LED in der Steuerleitung des Schaltelements vorgesehen ist.

Die Erfindung wird anhand der nachfolgenden Figuren näher erläutert. Es zeigt:
- Fig. 1:: ein Blockschaltbild einer bevorzugten Ausgestaltung der erfindungsgemäßen Vorrichtung; und
- Fig. 2:: Ablaufdiagramme einzelner Größen der erfindungsgemäßen Vorrichtung bei Auftreten eines Überstromereignisses:
a) zeitlicher Verlauf des Steuerimpulses TS der Steuereinheit,
b) zeitlicher Verlauf des Statussignals OC der Stromüberwachungseinheit,
c) zeitlicher Verlauf des Einschaltsignals SW der Halte-/Rücksetzschaltung für das Schaltelement,
d) zeitlicher Verlauf des Laststrorns ILast.

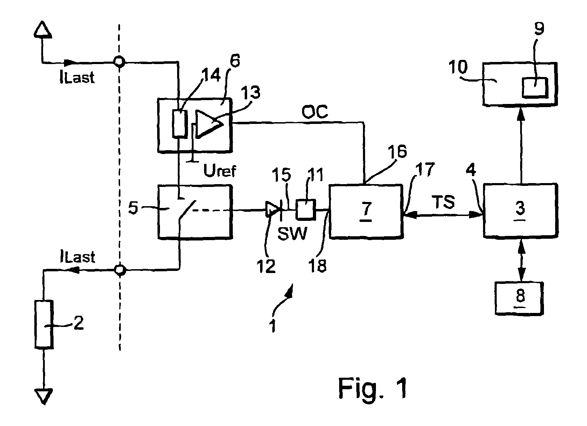

Fig. 1 zeigt ein Blockschaltbild einer bevorzugten Ausgestaltung der erfindungsgemäßen Vorrichtung 1 zur Schaltung und/oder Überwachung eines Laststromes ILast. In dem dargestellten Blockschaltbild ist die erfindungsgemäße Lösung für ein Einkanal-Gerät mit einem stromgesteuerten Schaltelement 5 dargestellt. Die Schaltung 1 kann jedoch prinzipiell für beliebig viele Kanäle und beliebige Schaltelemente 5 verwendet werden.

Die erfindungsgemäße Vorrichtung 1 bzw. die Schaltung zur Überwachung einer Laststromes ILast umfasst eine Steuereinheit 3 und ein Schaltelement 5 zum Ein- oder Ausschalten der Last 2. Bei der Last 2 handelt es sich beispielsweise um einen Widerstand. Zum Einschalten des Schaltelements 5 generiert die Steuereinheit 3 einen Einschaltimpuls TSe, während sie zum Ausschalten des Schaltelements 5 ein Ausschaltsignal TSa generiert.

Wesentliche Komponente der erfindungsgemäßen Vorrichtung 1 ist darüber hinaus die Stromüberwachungseinheit 6, die im Falle des Auftretens eines Überstromes der länger als die Toleranzzeit tR ist, ein Statussignal OCü "Überstrom" und im Normalbetrieb ein Statussignal OCn "Normal" generiert. Die Halte-/Rücksetz-schaltung 7 generiert aus dem Einschaltimpuls TSe der Steuereinheit 3 bei einem Statussignal OCn "Normal" der Stromüberwachungseinheit 6 ein Einschaltsignal SW für das Schaltelement 5.

Tritt das Statussignal OCü "Überstrom" der Stromüberwachungseinheit 6 auf, so wird durch dieses Statussignal OCü das Einschaltsignal SW der Steuereinheit 3 für das Schaltelement 5 der Halte-/Rücksetzschaltung 7 rückgesetzt. Nachfolgend überprüft die Steuereinheit 3 zyklisch den Status des Schaltelements 5 und generiert nach einer erfolgten Abschaltung durch die Stromüberwachungseinheit 6, die infolge eines Überstromes aufgetreten ist, den Einschaltimpuls (TSe) - da gemäß ihren Vorgaben die Last zugeschaltet sein soll. Dieser führt jedoch erst dann zu einem dauerhaften Aktivieren des Schaltelements 5, wenn das Überstromereignis wieder vorüber, also die Ursache für das Auftreten des Überstromes erkannt und behoben ist. Bis zu diesem Zeitpunkt führen alle Einschaltversuche der Steuereinheit 3 zur weiteren Abschaltung.

Im gezeigten Fall handelt es sich bei dem Schaltelement 5 um einen bipolaren Transistor, dessen Ansteuerung über den in der Steuerleitung 15 fließenden Steuerstrom erfolgt. Der Steuerstrom fließt dabei durch die Status-Anzeigeeinheit 12. bei der es sich im einfachsten Fall um eine LED handelt. Diese leuchtet also nur, wenn das Schaltelement 5 stromführend ist. Daher wird für die LED 12 kein Extra-Strom und keine separate Steuerleitung benötigt.

Angesteuert wird das Schaltelement 5 - wie bereits erwähnt - durch den Einschaltimpuls TSe bzw. den Ausschaltimpuls TSa der Steuereinheit 3. Sobald die Steuereinheit 3 das Ausschaltsignal TSa erzeugt, zieht die Steuereinheit 3 das Signal TSa mit dem als Eingang/Ausgang 4 konfigurierten Pin definiert auf Masse. Das Einschalten bzw. Aktivieren des Schaltelements 5 erfolgt über einen kurzen (hier 1-Clock = 125ns) Einschaltimpuls TSe auf den logischen Pegel HI. Nach diesem Einschaltimpuls TSe wird der Eingang/Ausgang 4 der Steuereinheit 3 als Eingang geschaltet. Der Eingang/Ausgang 4 der Steuereinheit wird nunmehr hochohmig, und die Steuereinheit 3 kann über den Eingang/Ausgang 4 den Status der Stromüberwachungseinheit 6 einlesen. Der Status wird in der Speichereinheit 8 gespeichert und kann über eine Datenleitung zu einer entfernten Leitstelle 10 geführt und dort ausgewertet oder am Gerät, zum Beispiel auf dem Display, als Fehler angezeigt werden.

Bei der erfindungsgemäßen Vorrichtung 1 ist vorteilhaft, dass nur ein Pin für die Bereitstellung des Einschaltimpulses TSe und für das Feedback hinsichtlich der Statusinformation notwendig ist. Weiterhin schaltet die erfindungsgemäße Schaltung 1 selbsttätig auf Hardware-Basis ab; eine softwaremäßiger Reaktion ist nicht erforderlich. Darüber hinaus lässt sich der kurze Einschaltimpuls TSe in der Steuereinheit 3 leicht realisieren. Es sind keine NOPS/Schleifen oder Zähler notwendig. Besonders zu erwähnen ist auch, dass sich die Schaltfunktion nach Beendigung des Überstromereignisses durch die zyklischen Einschaltversuche quasi selbständig erholt.

Vorteilhafter Weise herrschen weiterhin bei dem sicherheitsrelevanten Schaltzustand 'AUS' ― wenn also die Steuereinheit 3 das Ausschaltsignal TSa generiert - kontrollierte Bedingungen und das Signal SW ist dauerhaft und niederohmig auf den logischen Pegel LO gesetzt.

Bei der Halte-/Rücksetzschaltung 7 handelt es sich bevorzugt um eine abschaltbare Treiberschaltung mit einem Signaleingang 16, einem Signalausgang 18 und einem Aktivierungseingang 17, wobei an dem Signaleingang 16 das Statussignal OC der Stromüberwachungseinheit 6 und wobei an dem Aktivierungseingang 17 der Einschaltpuls TSe der Steuereinheit 3 und wobei der rückgekoppelte Signalausgang 18 das Schaltelement 5 ansteuert.

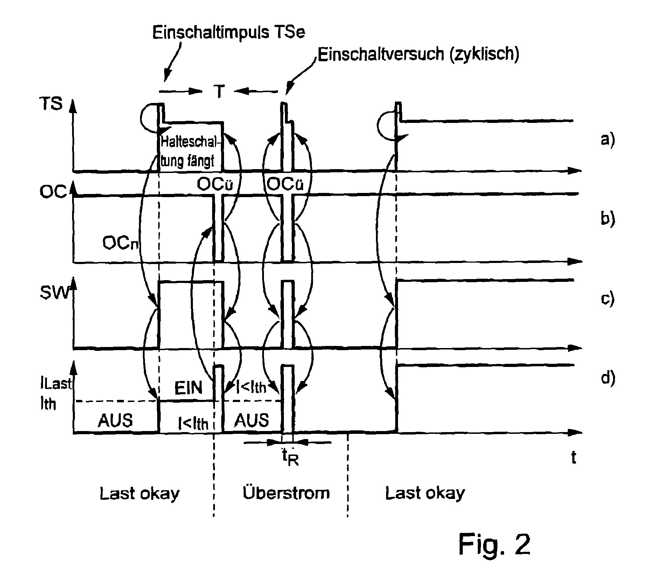

Die nachfolgende Erläuterung wird durch die Signalverläufe, die in Fig. 2 dargestellt sind, verdeutlicht. Liegt kein Überstrom vor, gibt die Stromüberwachungseinheit 6 ein logisches HI (→ Statussignal OCn 'Normalbetrieb') an den Signaleingang 16 der abschaltbaren Treiberschaltung 7. Durch den kurzen Einschaltimpuls TSe auf HI wird die Treiberschaltung 7 über den Aktivierungseingang 17 eingeschaltet, und der Signalausgang 18 (→ Signal SW der Halte-/Rücksetzschaltung 7) wird ebenfalls auf logisch HI gesetzt. Dadurch hält die Halte-/Rücksetzschaltung 7 bzw. die Treiber schaltung den Einschaltimpuls TSe auch nach dem kurzen Einschaltimpuls TSe auf dem logischen Pegel HI, wenn der Eingang/Ausgang 4 der Steuereinheit 3 hochohmig ist. Dieser Zustand wird beibehalten, solange kein Überstrom auftritt oder definiert ausgeschaltet wird.

Tritt ein Überstrom auf zieht die Stromüberwachungseinheit 6 den Signaleingang 16 der Treiberschaltung 7 auf den logischen Pegel LO, und die Treiberschaltung 7 schaltet sich selber über den Aktivierungseingang 17 aus; der Signalausgang 18 wird hochohmig. Als Folge davon wird das Schaltelement 5 deaktiviert.

Soll das Schaltelement 5 aktiviert sein, versucht die Steuereinheit 3 zyklisch (z.B. T = 0,4s) über den Einschaltimpuls TSe das Schaltelement 5 einzuschalten. Dadurch ergibt sich automatisch eine zyklische Überprüfung bzw. Überwachung des Laststromes. Sobald das Überstromereignis vorüber ist und der bei eingeschaltetem Schaltelement fließende Strom wieder unter eine vorgegebene Abschaltschwelle Ith gefallen ist, kann der Signalausgang 18 spätestens nach dem auf das Ende des Überstromereignisses folgenden Zyklus wieder normal arbeiten. Solange das Überstromereignis besteht, ergibt sich ein zyklisches Ein- und Ausschalten des Schaltelements 5; danach erholt sich die Schaltfunktion selbsttätig.

Wie bereits erwähnt, ist es besonders vorteilhaft den jeweiligen Zustand der Schaltung über eine Status-Anzeigeeinheit 12 zu visualisieren oder auch hörbar zu machen. Als besonders vorteilhaft wird die Ausgestaltung angesehen, bei der eine LED 12 in die Steuerleitung 15 des Schaltelements 5 (z.B. des bipolaren Transistors) eingebracht ist. Diese LED 12 leuchtet nur und zwar automatisch nur dann, wenn das Schaltelement 5 aktiviert ist. Im Falle eines Überstrvmereignisses blinkt die LED 12. Somit ist die Fehleranzeige direkt am Gerät sichtbar. Ein weiterer Vorteil dieser Art der Statusanzeige ist darin zu sehen, dass die LED 12 keinen Extra-Strom für die Energieversorgung und keine separate Steuerleitung benötigt.

Weiterhin zeichnet sich die gezeigte Ausführungsform der erfindungsgemäßen Schaltung 1 dadurch aus, dass die Verlustleistung bei Auftreten eines Überstromereignisses über die Zykluszeit in einfacher Weise, nämlich durch die Toleranzzeit tR und die Zykluszeit der Einschaltversuche, justierbar ist.

Besonders vorteilhaft ist es darüber hinaus, wenn über einen Spannungsteiler eine skalierte, dem Laststrom proportionale Spannung an den Komparator 13 geliefert wird. Der Komparator 13 vergleicht diese Spannung mit einer Referenzspannung Uref. Handelt es sich bei dem Schaltelement 5 z.B. um einen PNP-Transistor, so handelt es sich bei dem Bezugspotential um die positive Versorgungsspannung des Schaltelements 5. Andernfalls wird als Bezugspotential Masse genommen.

Die erfindungsgemäße Vorrichtung führt aufgrund der hohen Genauigkeit der Strommessung zu einer geringeren Streuung des Abschaltpunktes. Im Seriengerät muss jedoch mit dem maximal garantierten Schaltstrom plus die Streuung der Messung gerechnet und somit überdimensioniert werden. Durch eine geringe Streuung werden somit zu hohe Ströme und damit verbundene Verlustleistungen am Schaltelement vermieden und der Einsatz von kleineren und günstigeren Schaltern ermöglicht.

Das Ausgangssignal des Komparators 13 gelangt pegelgewandelt an den Signaleingang 16 der Halte-/Rücksetzschaltung 7 und erzeugt dort wie bereits beschrieben, ein Statussignal OCn für den Normalbetrieb (logischer Pegel HI) und ein Statussignal OCü im Falle eines Überstromereignisses (logischer Pegel LO).

Weiterhin umfasst die in Fig. 1 gezeigte Schaltung 1 eine Verzögerungsschaltung 14, bei der es sich im einfachsten Fall um einen Tiefpass handelt. Über die Verzögerungsschaltung 14 lässt sich die Toleranzzeit tR der Stromüberwachungseinheit 6 einstellen. Insbesondere ist hier auch vorgesehen, dass hohe Überströme durch einen gefilterten Anstieg automatisch zu einer schnelleren Abschaltung der Last 2 führen. Durch diese Maßnahme lässt sich die Verlustleistung an dem Schaltelement 5 minimieren.

Infolge der genauen Messung kommt es zu einer minimierten Verlustleitung. Die Verlustleistung lässt sich darüber hinaus über die Zeitkonstante des Tiefpasses 14 leicht justierbar. Weiterhin lässt sich das Schaltelement 5 aufgrund der geringen Verlustleistung klein auslegen. Über den Tiefpaß 14 kann die gewünschte maximal schaltbare kapazitive Last eingestellt und die Empfindlichkeit justiert werden. Zudem ist eine freie Auswahl der Schaltschwelle Uref sowohl über den Spannungsteiler oder über die Steuereinheit 3 möglich. Abgesehen von den bereits erwähnten Vorteilen zeichnet sich die erfindungsgemäße Vorrichtung 1 durch ein gutes Preis-/Leistungsverhältnis aus.

### Bezugszeichenliste

- 1: erfindungsgemäße Vorrichtung
- 2: Last
- 3: Steuereinheit
- 4: Eingang/Ausgang
- 5: Schaltelement
- 6: Stromüberwachungseinheit
- 7: Halte-/Rücksetzschaltung / Treiberschaltung
- 8: Speichereinheit
- 9: Display
- 10: Leitstelle
- 11: Stromregler
- 12: Status-Anzeigeeinheit / LED
- 13: Stromvergleicher / Komparator
- 14: Verzögerungsschaltung / Tiefpass
- 15: Steuerleitung
- 16: Signaleingang der Halte-/Rücksetzschaltung
- 17: Aktivierungseingang der Halte-/Rücksetzschaltung
- 18: Signalausgang der Halte-/Rücksetzschaltung

- TSe: Einschaltimpuls der Steuereinheit
- TSa: Ausschaltimpuls der Steuereinheit
- SW: Einschaltsignal der Halte-/Rücksetzschaltung
- OCü: Statussignal 'Überstrom' der Stromüberwachungseinheit
- OCn: Statussignal 'Normal' der Stromüberwachungseinheit
- ILast: Laststrom

## Patentansprüche

1. Vorrichtung zur Schaltung und Überwachung einer Laststromes (ILast) mit einer Steuereinheit (3) und einem Schaltelement (5), wobei die Steuereinheit (3) zum Einschalten des Schaltelements (5) einen Einschaltimpuls (TSe) und zum Ausschalten des Schaltelements (5) ein Ausschaltsignal (TSa) generiert, mit einer Stromüberwachungseinheit (6), die im Falle des Auftretens eines Überstromereignisses ein Statussignal (OCü) "Überstrom" und im Normalbetrieb ein Statussignal (OCn) "Normal" generiert,
mit einer Halte-/Rücksetzschaltung (7), die aus dem Einschaltimpuls (TSe) der Steuereinheit (3) bei einem Statussignal (OCn) "Normal" der Stromüberwachungseinheit (6) ein Einschaltsignal (SW) für das Schaltelement (5) generiert,
wobei das Statussignal (OCü) "Überstrom" der Stromüberwachungseinheit (6) das Einschaltsignal (SW) für das Schaltelement (5) der Halte-/Rücksetzschaltung (7) rücksetzt,
und wobei die Steuereinheit (3)den Zustand des Schaltelements (5) zyklisch überprüft und nach einer Abschaltung durch die Stromüberwachungseinheit (6) zyklisch den Einschaltimpuls (TSe) generiert.

2. Vorrichtung nach Anspruch 1,
wobei es sich bei der Steuereinheit (3) um einen Mikroprozessor handelt, der zumindest einen Ausgang/Eingang (4) aufweist, wobei der Ausgang nach Aussenden des Einschaltimpulses (TSe) als Eingang geschaltet ist, so dass über diesen Eingang der jeweilige Status der Stromüberwachungseinheit (6) einlesbar ist

3. Vorrichtung nach Anspruch 2,
wobei eine Speichereinheit (8) vorgesehen ist, in der Information über den Status der Stromüberwachungseinheit (6) gespeichert ist.

4. Vorrichtung nach Anspruch 3,
wobei die Steuereinheit (3) den gespeicherten Status der Stromüberwachungseinheit (6) auswertet und
wobei eine Anzeigeeinheit (9) vorgesehen ist, auf der der gespeicherte Status im Falle eines Überstromereignisses als Fehlercode anzeigbar ist, oder dass die Steuereinheit (3) den gespeicherten Status an eine übergeordnete Leitstelle (10) weiterleitet.

5. Vorrichtung nach Anspruch 1,
wobei es sich bei dem Schaltelement (5) um einen Transistor oder um ein Relais handelt.

6. Vorrichtung nach Anspruch 1 oder 5,
wobei es sich bei dem Schaltelement (5) um einen MOSFET mit Gate, Source und Drain handelt.

7. Vorrichtung nach Anspruch 1 oder 5,
wobei es sich bei dem Schaltelement (5) um eine bipolaren Transistor mit Emitter, Basis und Kollektor handelt.

8. Vorrichtung nach Anspruch 1 oder 5,
wobei im Falle eines stromgesteuerten Schaltelements (5) eine Stromreglung (13, 14) vorgesehen ist, die die Stromzufuhr zu dem Schaltelement (5) regelt.

9. Vorrichtung nach Anspruch 1, 5, 6 7 oder 8,
wobei eine Status-Anzeigeeinheit (12) vorgesehen ist, die in einer Steuerleitung (15) des Schaltelements (5) angeordnet ist.

10. Vorrichtung nach Anspruch 9,
wobei es sich bei der Status-Anzeigeeinheit (12) um eine optische Anzeigeeinheit, insbesondere eine LED und/oder akustische Status-Anzeigeeinheit handelt.

11. Vorrichtung nach Anspruch 1,
wobei es sich bei der Halte-/Rücksetzschaltung (7) um eine abschaltbare Treiberschaltung mit einem Signaleingang (16), einem Signalausgang (17) und einem Aktivierungseingang handelt, wobei an dem Signaleingang (16) das Statussignal (OC) der Stromüberwachungseinheit (6) und wobei an dem Aktivierungseingang (17) der Einschaltpuls (TSe) der Steuereinheit (3) und der Signalausgang anliegt und wobei der Signalausgang (18) das Schaltelement (5) ansteuert.

12. Vorrichtung nach Anspruch 1,
wobei die Stromüberwachungseinheft (6) zumindest einen Stromvergleicher (13) und eine Verzögerungsschaltung (14) zum Einstellen der Reaktionszeit (tR) aufweist.

13. Vorrichtung nach Anspruch 12,
wobei es sich bei dem Strornvergleicher (13) um einen Komparator handelt.

14. Vorrichtung nach Anspruch 12,
wobei es sich bei der Verzögerungsschaltung (14) um einen Tiefpass handelt.
